# FASCICULE DE BREVET EUROPEEN

(11) **EP 2 553 888 B1**
(45) Date de publication et mention de la délivrance du brevet: **19.07.2017**
(21) Numéro de dépôt: 11719329.2
(22) Date de dépôt: 01.04.2011
(51) Int. Cl.: H04L 12/701, H04L 12/801, H04L 12/721, H04L 12/725, H04L 12/911, H04L 12/54

(54) **PROCÉDÉ ET SYSTÈME DE TRANSMISSION DE FLUX MULTIMÉDIA**
VERFAHREN UND SYSTEM ZUR ÜBERTRAGUNG VON MULTIMEDIA-STREAMS
METHOD AND SYSTEM FOR TRANSMITTING MULTIMEDIA STREAMS

(30) Priorité: 02.04.2010 FR 1001388
(43) Date de publication de la demande: 06.02.2013
(73) Titulaire: THALES, 92200 Neuilly-sur-Seine (FR)
(72) Inventeur: DELATTRE, Michel, F-92704 Colombes Cedex (FR); BLANCHARD, Eric, F-92704 Colombes Cedex (FR)
(74) Mandataire: Lavoix
(86) Numéro de dépôt international: PCT/FR2011/050748
(87) Numéro de publication internationale: WO 2011/121260

(56) Documents cités:
- EP-A2- 1 089 517
- FR-A1- 2 905 046
- FR-A1- 2 914 523
- US-A1- 2001 019 554

## Description

L'invention concerne un procédé et un système de transmission d'au moins un flux de données d'une session multimédia à travers un réseau de télécommunication distribué comprenant au moins un coeur de réseau comprenant une pluralité de noeuds interconnectés par une pluralité de liens, chaque noeud dudit réseau comportant un module de routage, ladite session étant établie entre un premier terminal et au moins un deuxième terminal hors du coeur du réseau, et ledit coeur de réseau comprenant en outre au moins deux modules de bordure, constituant des points d'accès audit coeur de réseau pour lesdits premier et deuxième terminaux.

Dans la suite de la description et dans les revendications, on entendra par terminal un équipement apte à émettre et/ou recevoir des données, qu'il s'agisse d'un terminal usager ou d'un équipement de sécurité, agissant en mandataire pour le compte de terminaux déployés dans un périmètre protégé et n'accédant aux réseaux externes à ce périmètre que par le biais de cet équipement de sécurité.

L'invention s'applique en particulier à la transmission de données multimédia en temps réel sur un réseau de communications utilisant le protocole IP, la transmission de données dans le coeur du réseau s'effectuant au moyen de liaisons radios.

Un tel réseau comprend des liens à débit variable, en raison notamment de la variation des canaux de propagation, due par exemple aux conditions météorologiques, et de la mutualisation des ressources spectrales, consistant à allouer de manière dynamique les ressources spatiales en fonction des besoins instantanés. Les ressources radio sont ainsi à la fois limitées, variables et coûteuses.

De plus, la transmission de données multimédia en temps réel est exigeante en terme de qualité de service. En effet, de telles données sont transmises sous la forme de flux isochrones, dont les paquets de données sont envoyés par un terminal émetteur à intervalles de temps réguliers. Pour être exploitables, ces paquets doivent également être reçus par un terminal récepteur selon des intervalles de temps réguliers.

La transmission de flux multimédia en temps réel nécessite ainsi le contrôle de plusieurs paramètres tels que la bande passante, le temps de transit et la gigue, c'est-à-dire la variation des délais d'acheminement des paquets sur le réseau. Le contrôle de ces paramètres pendant la durée de la session définit la qualité de service (QoS), qui se traduit pour le terminal récepteur par la garantie d'une qualité d'expérience (QoE).

Les réseaux « tout IP », qui permettent de faire converger sur une même infrastructure l'ensemble des services de télécommunications, ne sont pas nativement capables d'assurer une telle qualité de service, notamment car ils sont basés sur des mécanismes de traitement individuel de paquets de données, et non de flux de paquets.

Plusieurs mécanismes sont donc généralement mis en oeuvre pour contrôler la qualité de service de sessions sur de tels réseaux. Notamment, la bande passante disponible peut être contrôlée par la mise en oeuvre d'un contrôle d'admission (ou CAC, pour Connection Admission Control), qui permet de déterminer, préalablement à l'émission de flux, si la bande passante disponible sur le réseau est suffisante pour la transmission de ces flux avec la qualité de service demandée, sans impacter la qualité de service d'autres flux transmis sur le réseau, et de rejeter les flux qui seraient excédentaires.

Cependant, le contrôle d'admission ne garantit pas toujours le maintien de la bande passante demandée lors de la transmission d'un flux, en particulier lorsque cette transmission est réalisée sur des réseaux sans fil, les liens de tels réseaux étant souvent à débit variable. Ainsi, le contrôle d'admission ne permet pas d'assurer la disponibilité de la bande passante pour la transmission de l'ensemble d'un flux, et la diminution de la bande passante disponible d'un lien à débit variable, sur lequel sont transmis des flux admis sur ce lien à l'issue d'un contrôle d'admission, peut causer la perte de paquets de ces flux.

Afin de garantir la bande passante disponible pour la transmission de flux, le contrôle d'admission peut être couplé à un protocole de réservation de ressources. Par exemple, le protocole RSVP (Ressource reSerVation Protocol) est un protocole qui permet au destinataire des flux de données de demander une certaine qualité de service (par exemple le délai ou la bande passante) à travers le réseau. Ce protocole de signalisation permet d'allouer dynamiquement de la bande passante : il est utilisé par les applications "temps réel" afin de réserver les ressources nécessaires au niveau des routeurs pour que la bande passante nécessaire soit disponible lors de la transmission.

Par ailleurs, des mécanismes de commande de session permettent d'initialiser, de modifier et de terminer des sessions multimédia. Par exemple, le protocole d'initialisation SIP (Session Initiation Protocol) permet d'authentifier et de localiser les participants de la session multimédia, les caractéristiques de la session étant décrites au moyen du protocole SDP (Session Description Protocol).

Les protocoles mis en oeuvre pour la transmission de flux de données sont généralement basés sur une architecture en couches, chaque couche étant chargée de fournir un ou plusieurs services spécifiques à la couche située au dessus, et les communications s'effectuant seulement entre couches adjacentes.

Cependant, dans les réseaux sans-fil, cette organisation n'est pas optimale, les propriétés des différentes couches étant dépendantes les unes des autres. Afin de répondre aux exigences de qualité de service des sessions multimédia, le système de communication doit pouvoir s'adapter dynamiquement aux situations du trafic et aux conditions réseau, besoin qui ne peut être satisfait par l'architecture réseau protocolaire traditionnelle.

L'émergence d'un nouveau concept, appelé « Cross-layering » (inter-couches), autorisant la violation de l'architecture protocolaire en couches, permet d'améliorer les performances de transmission dans les réseaux sans fil et d'assurer une meilleure qualité de service pour les sessions multimédia. Ainsi, les systèmes antennaires, les répartitions spectrales, les fonctions de modulation et de codage, le routage de l'information le long de chemins multiples, les fonctions d'optimisation de bout en bout s'adaptent tous en continu en fonction des besoins applicatifs et des capacités disponibles du réseau.

Par ailleurs, les mécanismes de routage de flux, de contrôle d'admission et de commande de session sont généralement mis en oeuvre séparément, et ne permettent pas le déploiement rapide de réseaux utilisant des systèmes de transmission adaptatifs.

Un exemple de routage de flux de données dans un réseau est décrit dans le document US2001/019554A1. On connaît du document WO/2008/125437 un procédé de routage de flux de données dans un réseau comprenant des routeurs multitopologie, chacune des topologies étant associée à une métrique particulière (par exemple le délai, le débit disponible, la bande passante...), dans lequel les mécanismes de routage et de réservation sont couplés. Selon ce procédé, une variation du débit utilisable d'un lien du réseau provoque un changement d'une métrique, changement qui est pris en compte pour le routage des flux de données.

Ce procédé présente plusieurs inconvénients. Notamment, il ne permet pas d'optimiser les ressources du réseau, et la variabilité des débits des liens peut provoquer des surcharges de signalisation et de traitement pour les routeurs du réseau. De plus, la connaissance de l'état du réseau n'est pas exploitée lors de la négociation d'un service pour une session, et les politiques de routage ne peuvent pas être sélectionnées session par session.

Le but de l'invention est ainsi de pallier les inconvénients des méthodes de transmission selon l'état de la technique qui utilisent beaucoup de ressources du réseau dans les phases d'établissement et de maintien de la session, pour garantir efficacement la qualité de service sur le réseau et répartir les charges sur le réseau.

A cette fin, l'invention a pour objet un procédé de transmission du type précité, caractérisé en ce qu'il comporte les étapes de :
- détermination par lesdits modules de bordure d'informations relatives à la topologie de routage et à l'état des liens dudit réseau, et nécessaires à la transmission de flux de données de la session,
- détermination, par un module de bordure sollicité par le premier terminal, de paramètres de ladite session comprenant une durée de la session et de contraintes d'écoulement des flux de ladite session dans le coeur de réseau,
- sélection par ledit module de bordure sollicité, lorsque lesdits flux de données doivent traverser ledit coeur de réseau, d'un module de bordure d'entrée et d'un module de bordure de sortie dudit coeur de réseau pour lesdits flux, en fonction desdites contraintes d'écoulement de flux et desdits paramètres de la session déterminés, et desdites informations relatives à la topologie de routage et aux états des liens,
- prédétermination d'un chemin, dudit module de bordure d'entrée audit module de bordure de sortie, pour l'ensemble desdits flux de la session, à travers ledit coeur de réseau, en fonction desdites contraintes d'écoulement des flux et desdites informations relatives à la topologie de routage et à l'état des liens, et en fonction d'objectifs d'optimisation du coeur de réseau,
- mise en place de ressources nécessaires pour satisfaire lesdites contraintes d'écoulement le long dudit chemin et les objectifs d'optimisation, et définition de règles de routage auprès de modules de routage situés le long dudit chemin, et
- transmission desdits flux de la session seulement par ledit chemin prédéterminé, le procédé comprenant en outre une étape de compression d'en-têtes des paquets des flux de la session, avant leur transmission dans le coeur de réseau, et une étape de décompression de ces en-têtes, après leur transmission dans le coeur de réseau.

Ainsi, ce procédé de transmission permet de négocier pour chaque session un service de transfert de flux, qui tient compte de l'état des liens du réseau, et de déterminer pour l'ensemble des flux un chemin optimal, assurant une qualité de service pour toute la durée de la session, tout en optimisant les ressources du réseau, c'est-à-dire en minimisant les ressources utilisées par la session. Ce procédé permet également un couplage entre les couches application, réseau et liaison de données de l'architecture réseau.

Selon d'autres aspects, le procédé de transmission comporte l'une ou plusieurs des caractéristiques suivantes :
- l'étape de détermination par lesdits modules de bordure d'informations relatives à la topologie de routage et à l'état des liens dudit réseau comprend la détermination par lesdits modules de routage desdites informations et la transmission desdites informations depuis lesdits modules de routage vers lesdits modules de bordure ;
- le procédé de transmission comprend en outre une étape de marquage desdits flux pour qu'ils suivent ledit chemin prédéterminé ;
- l'étape de détermination desdites contraintes d'écoulement des flux comprend la détermination de la priorité de ladite session par rapport à d'autres sessions, et l'étape de mise en place des ressources nécessaires comprend la préemption des ressources le long dudit chemin, en fonction de la priorité de la session ;
- l'étape de mise en place des ressources et de définition des règles de routage comprend la réservation des ressources le long dudit chemin, dans ledit coeur de réseau, interdisant leur usage par d'autres sessions pendant toute la durée de la session.
- le procédé comprend en outre une étape de compression d'en-têtes des paquets des flux de la session, avant leur transmission dans le coeur de réseau, et une étape de décompression de ces en-têtes, après leur transmission dans le coeur de réseau.

L'invention a également pour objet un système de transmission d'au moins un flux de données d'une session multimédia à travers un réseau de télécommunication distribué comprenant au moins un coeur de réseau comprenant une pluralité de noeuds interconnectés par une pluralité de liens, ladite session étant établie entre un premier terminal et au moins un deuxième terminal hors dudit coeur de réseau, ledit système comprenant, en bordure dudit coeur de réseau, au moins deux modules de bordure, constituant des points d'accès audit coeur de réseau pour lesdits premier et deuxième terminaux, et en chaque noeud dudit réseau un module de routage, caractérisé en ce que :
- lesdits modules de bordure comprennent des moyens pour déterminer des informations relatives à la topologie de routage et à l'état des liens dudit réseau, et nécessaires à la transmission de flux de données de la session,
- lesdits modules de bordure comprennent des moyens pour déterminer, lorsqu'ils sont sollicités par le premier terminal, des paramètres de ladite session comprenant une durée de la session, et des contraintes d'écoulement des flux de ladite session dans le coeur de réseau,
- lesdits modules de bordure comprennent des moyens pour sélectionner, lorsque lesdits flux de données doivent traverser ledit coeur de réseau, un module de bordure d'entrée et un module de bordure de sortie dudit coeur de réseau pour lesdits flux, en fonction desdites contraintes d'écoulement de flux et desdits paramètres de la session déterminés, et desdites informations relatives à la topologie de routage et aux états des liens,
- ledit système comprend des moyens pour prédéterminer un chemin, dudit module de bordure d'entrée audit module de bordure de sortie, pour l'ensemble desdits flux de la session, à travers ledit coeur de réseau, en fonction desdites contraintes d'écoulement des flux et desdites informations relatives à la topologie de routage et à l'état des liens, et en fonction d'objectifs d'optimisation du coeur de réseau,
- ledit système comprend des moyens pour mettre en place des ressources nécessaires pour satisfaire lesdites contraintes d'écoulement et lesdits objectifs d'optimisation le long dudit chemin et pour définir des règles de routage auprès de modules de routage situés le long dudit chemin, et
- ledit système comprend des moyens pour transmettre lesdits flux de la session seulement par ledit chemin prédéterminé, le système comprenant des moyens pour compresser des en-têtes des paquets des flux de la session, avant leur transmission dans le coeur de réseau, et des moyens pour décompresser lesdits en-têtes, après leur transmission dans le coeur de réseau.

Selon d'autres aspects, le système de transmission comporte l'une ou plusieurs des caractéristiques suivantes :
- lesdits modules de routage comportent en outre des moyens pour déterminer lesdites informations relatives à la topologie de routage et à l'état des liens dudit réseau et pour transmettre lesdites informations vers lesdits modules de bordure ;
- le système de transmission comprend des moyens pour marquer lesdits flux pour qu'ils suivent ledit chemin prédéterminé ;
- lesdits moyens pour déterminer lesdites contraintes d'écoulement des flux de la session comprennent des moyens pour déterminer la priorité de ladite session par rapport à d'autres sessions, et les moyens pour mettre en place les ressources nécessaires pour satisfaire lesdites contraintes d'écoulement le long dudit chemin comprennent des moyens pour préempter lesdites ressources le long dudit chemin, en fonction de la priorité de la session ;
- lesdits moyens pour mettre en place lesdites ressources nécessaires comprennent des moyens pour réserver lesdites ressources le long dudit chemin, dans ledit coeur de réseau, et pour interdire leur usage par d'autres sessions pendant tout ladite durée de la session ; et
- le système de transmission comprend des moyens pour compresser des en-têtes des paquets des flux de la session, avant leur transmission dans le coeur de réseau, et des moyens pour décompresser lesdits en-têtes, après leur transmission dans le coeur de réseau.

L'invention sera davantage comprise au regard d'un exemple de réalisation de l'invention qui va maintenant être décrit en faisant référence aux figures annexées parmi lesquelles :
- la figure 1 est un schéma illustrant un réseau de communication adapté à la mise en oeuvre du procédé selon l'invention ; et
- la figure 2 est un schéma synoptique illustrant la mise en oeuvre d'un procédé de transmission selon un mode de réalisation de l'invention.

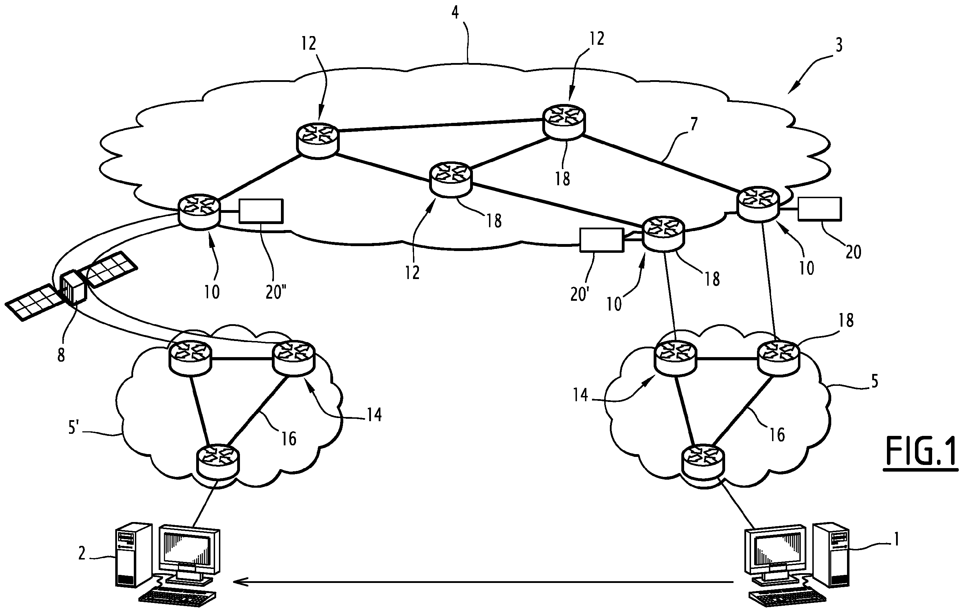

La figure 1 représente l'architecture globale d'un système dans lequel le procédé selon l'invention peut être mis en oeuvre.

Ce système comprend un terminal demandeur 1, un terminal sollicité 2, et un réseau 3 de communication. Ces terminaux demandeur 1 et sollicité 2 sont par exemple des équipements multimédias, ou des équipements de sécurité tels que des chiffreurs raccordés à un réseau local et protégeant ce réseau local.

Le terminal demandeur 1 est apte à demander l'établissement d'une session multimédia et à échanger des données, à travers le réseau 3, avec le terminal sollicité 2.

Le réseau 3 de communication est un réseau distribué, c'est-à-dire ne comprenant pas d'organe de décision central, organisé en trois niveaux : un coeur 4 de réseau, des réseaux 5, 5' d'accès, et des réseaux de desserte, non représentés.

Le coeur 4 de réseau est un réseau maillé, comportant une pluralité de noeuds 10, 12, interconnectés par un maillage de liens 7, à débits variables. Ces liens 7 utilisent diverses technologies de transmission et comprennent des liens optiques, des liens radios terrestres et des liens radios sur une infrastructure satellitaire. Ainsi, les caractéristiques de ces liens, par exemple leur connectivité point-à-point ou multipoint, leur délai de transmission et la stabilité de ce délai, varient d'un lien à un autre.

Parmi les noeuds 10, 12 du coeur 4 de réseau, on distingue les noeuds 10 de bordure, points d'entrée dans le coeur 4 de réseau, et les noeuds internes 12. Les noeuds internes 12 sont des noeuds intermédiaires, non reliés aux réseaux 5, 5' d'accès, qui permettent d'augmenter le maillage pour plus de robustesse au sein du coeur 4 de réseau, et de relayer les données transmises sur les liens 7.

Les réseaux 5, 5' d'accès comportent également des noeuds 14 reliés par des liens 16, et permettent de relier les terminaux demandeur 1 et sollicité 2 au coeur 4 de réseau. Certains de ces liens 16 utilisent des technologies de transmission sur une infrastructure satellite 8.

Tous les noeuds 10, 12 et 14 du réseau comprennent un module 18 de routage. Par ailleurs, les noeuds 10 de bordure comprennent également un module 20, 20', 20" de bordure. On distingue ainsi les noeuds 10, 12, 14, dispositifs matériels disposés en chaque extrémité des liens 7, 16, des modules de routage 18 et de bordure 20, 20', 20", agents logiciels fournissant des services de communication.

Chacun des modules 18 de routage comprend des moyens pour déterminer la topologie de routage du réseau 3 et les états détaillés des liens 7, 16 du réseau, et des moyens pour transmettre ces informations aux modules 20, 20', 20" de bordure.

Chaque module 18 de routage comprend également des moyens pour recevoir des flux de données émis par un module de routage voisin, et pour aiguiller ces flux de données vers un autre module de routage voisin, pour que ces flux de données suivent un chemin prédéterminé.

Les modules 20, 20', 20" de bordure comprennent des moyens pour négocier des paramètres de service d'une session, demandés par le terminal demandeur 1 lors de l'initiation de la session, pour estimer la durée de la session, et pour définir, en fonction de ces paramètres négociés, de la durée estimée de cette session et de la topologie de routage du réseau 3 et les états détaillés des liens 7, 16 du réseau, des contraintes d'écoulement des flux de la session.

Les modules 20, 20', 20" de bordure comprennent également des moyens pour sélectionner, en fonction de contraintes d'écoulement déterminées pour les flux d'une session, deux modules 20', 20" de bordure, respectivement noeud d'entrée et noeud de sortie du coeur 4 de réseau pour les flux de la session.

Par ailleurs, les modules 20, 20', 20" de bordure sont aptes à déterminer, en fonction notamment des informations de la topologie et de l'état des liens sur le réseau 3, un chemin entre le terminal demandeur 1 et le terminal sollicité 2, passant par les modules de bordure d'entrée et de sortie préalablement sélectionnés.

Les modules 20, 20', 20" de bordure comprennent également des moyens pour demander la mise en place de ressources sur les liens du coeur de réseau et les liens d'accès composant le chemin déterminé, de manière à satisfaire les contraintes d'écoulement des flux et des critères d'optimisation du réseau.

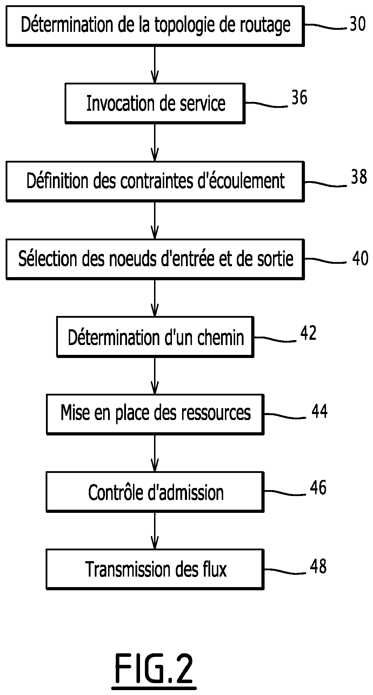

Le procédé de transmission selon l'invention, représenté schématiquement sur la figure 2, s'appuie sur la connaissance des états et des tendances des liens du réseau 3 pour organiser, lors de l'initialisation d'une session, l'écoulement optimal des flux de cette session.

Ainsi, lors d'une étape 30 réalisée de manière continue, les modules 18 de routage déterminent la topologie de routage du réseau 3, en identifiant les noeuds 10, 12, 14 et les liens 7, 16 du réseau, ces liens étant caractérisés en noeuds 10, 12 de coeurs et noeuds 14 d'accès. Les modules 18 de routage collectent également les états détaillés des liens du réseau, permettant de déterminer la disponibilité de ces liens. Ces états des liens, obtenus par les modules 18 de routage à partir des informations produites par des algorithmes de réservation et de supervision des échanges entre les noeuds, algorithmes répartis et appliquant les principes de « cross-layering », tiennent compte notamment des demandes de transmission et des réservations effectuées sur les liens 7, 16, et des délais de transmission et des capacités de ces liens 7, 16, et en particulier des capacités variables des liens radio du réseau. Ces états des liens comprennent également des informations relatives au niveau de risque de ces liens en terme de sécurité.

Avantageusement, cette étape 30 est réalisée suivant un protocole de routage à états de liens tel que le protocole OSPF-TE (pour « Open Shortest Path First - Traffic Engineering), selon lequel les modules 18 de routage collectent l'ensemble des états des liens et construisent de leur point de vue l'arbre de tous les chemins dans le réseau 3.

Les modules 18 de routage transmettent alors aux modules 20, 20', 20" de bordure les informations relatives à la topologie du réseau et aux états des liens déterminées.

Lorsque le terminal demandeur 1 souhaite initier une session multimédia demandant une garantie de service avec le terminal sollicité 2, il envoie dans une étape 36 une requête pour invoquer ce service. Avantageusement, cette requête est envoyée suivant un protocole de signalisation d'appels telle que la signalisation SIP.

Cette requête indique des paramètres du service associé à la session, et notamment quel est le destinataire des données, le type de données à transmettre (données audio ou vidéo par exemple), le codec utilisé pour la compression de ces données, le niveau de priorité de la session, et le niveau de sécurité de la session. Cette requête est transmise, via le réseau d'accès 5, à un premier module 20 de bordure quelconque, qui négocie ces paramètres de service avec le terminal demandeur 1, en fonction notamment des informations relatives à la topologie du réseau 3 et aux états des liens. Cette négociation est un moyen permettant au terminal demandeur 1 et au premier module 20 de bordure de se mettre d'accord sur le niveau de qualité de service que doit fournir le réseau pour la transmission des flux de la session.

A partir de ces paramètres négociés, le premier module 20 de bordure définit, dans une étape 38, des contraintes d'écoulement des flux de la session, et estime la durée de cette session. Ces contraintes d'écoulement sont des paramètres techniques relatifs à l'écoulement des flux de la session, tels que la gigue et le délai de transfert maximales pour que le service négocié soit garanti. Le premier module 20 de bordure définit également, à partir du niveau de priorité négocié, le niveau d'importance de la session par rapport à d'autres sessions invoquées ou en cours.

Puis, lors d'une étape 40, le premier module 20 de bordure sélectionne, en fonction de la topologie du réseau 3 et de l'état des liens sur ce réseau déterminés lors de l'étape 30, et en fonction des contraintes d'écoulement des flux de la session définis lors de l'étape 38, deux modules 20', 20" de bordure, respectivement noeud d'entrée dans le coeur de réseau et noeud de sortie pour les flux de la session. Ces modules 20', 20" de bordure d'entrée et de sortie sont par exemple les modules de bordure les plus proches des réseaux d'accès 5 et 5' par lesquels le terminal demandeur 1 et le terminal sollicité 2 accèdent au coeur 4 de réseau.

Le premier module 20 de bordure redirige alors la demande d'initialisation de session du terminal demandeur 1 vers le module 20' de bordure d'entrée sélectionné.

Le module 20' de bordure d'entrée poursuit alors l'initialisation de la session avec le terminal demandeur 1 et le module 20" de bordure de sortie.

Dans une étape 42, les module 20', 20" de bordure d'entrée recherchent ensuite, en fonction des informations de la topologie et de l'état des liens sur le réseau, un chemin entre le terminal demandeur 1 et le terminal sollicité 2, passant par les modules 20', 20" de bordure d'entrée et de sortie, chemin permettant l'écoulement des flux de la session selon les contraintes d'écoulement définies lors de l'étape 38. Lors de la recherche de ce chemin, les module 20', 20" de bordure d'entrée et de sortie tiennent également compte de la politique globale exercée sur le coeur 4 de réseau, notamment en termes de posture de sécurité et d'optimisation des ressources du coeur de réseau 4.

Ainsi, en fonction du niveau de sécurité négocié pour la session, le chemin déterminé pourra être composé de liens de haute sécurité, par exemple des liens à protection anti-brouillage.

Par ailleurs, lors de la détermination de ce chemin, les modules 20' et 20" de bordure optimisent les ressources du réseau 3, à partir des critères d'optimisation définis pour l'ensemble du réseau 3. Les critères d'optimisation évaluent un coût associé à chacun des liens du réseau, dépendant de l'état de ces liens, et les modules 20', 20" de bordure sélectionnent préférentiellement, lors de la détermination du chemin, les liens dont les coûts sont les plus faibles et répondent aux contraintes d'écoulement. Ces critères d'optimisation peuvent notamment tenir compte de l'efficacité spectrale des liens du réseau, les modules 20' et 20" de bordure privilégiant lors de la détermination du chemin les liens dont l'efficacité spectrale est la plus grande.

Une fois le chemin déterminé, lors d'une étape 44, les module 20' et 20" de bordure demandent la mise en place de ressources sur les liens 7 du coeur de réseau et les liens 16 d'accès composant ce chemin, de manière à satisfaire les contraintes d'écoulement des flux et les critères d'optimisation du réseau. Avantageusement, ces ressources sont mises en place au moyen d'un protocole de réservation de type RSVP-TE, une signalisation périodique émise par les modules 20' et 20" de bordure indiquant à chacun des modules 18 de routage situés le long du chemin les règles d'aiguillage des flux de la session.

De plus, les modules 20' et 20" de bordure exercent, si le niveau de priorité de la session et l'état des liens le requièrent, une préemption de ressources, afin de libérer des ressources utilisées par d'autres sessions de priorité moindre, et de les attribuer à la session initiée.

Par ailleurs, les module 20' et 20" de bordure requièrent la mise en place de mécanismes de compression et de décompression des en-têtes IP par la méthode ROHC (RObust Header Compression). Cette méthode de compression permet en effet d'augmenter la capacité de transmission d'informations utiles par le réseau, en réduisant la taille de l'en-tête des paquets transmis. En effet, les en-têtes IP constituent généralement une part importante des paquets de données multimédia. Par exemple, 60 octets d'en-tête IP sont nécessaires pour transmettre 20 octets de données audio, selon le protocole IPv6. La compression des en-têtes, réduisant la taille de ces en-têtes de 60 octets à 4 octets, permet ainsi de réduire d'un facteur quatre les ressources utilisées pour la transmission de ces données.

Puis, dans une étape 46 de contrôle d'admission, si les ressources nécessaires à l'écoulement des flux de la session selon les contraintes négociées ont pu être mises en place, le module 20' de bordure d'entrée admet la session, et signale cette admission au terminal demandeur 1. Par contre, si aucun chemin n'a été trouvé pour écouler les flux, ou si les ressources nécessaires n'ont pu être mises en place, la session est rejetée. Ce contrôle d'admission permet ainsi d'éliminer au plus tôt les sessions dont les contraintes ne peuvent être satisfaites par le réseau.

Les flux de la session admise sont ensuite transmis, dans une étape 48, entre le terminal demandeur 1 et le terminal sollicité 2, suivant le seul chemin prédéterminé lors de l'étape 42. Ainsi, contrairement aux protocoles de routage par paquets, selon lesquels chaque paquet de données est traité individuellement, le procédé selon l'invention permet de déterminer et de réserver un chemin optimal pour l'ensemble des flux de la session, ce chemin ne variant pas au cours de la transmission du fait de facteurs extérieurs.

Lors de la transmission des flux de la session, les modules de routage disposés le long du chemin prédéterminé aiguillent les paquets de données en suivant les règles d'aiguillage définies lors de l'étape 44. Pour que les flux de cette session suivent effectivement le chemin déterminé, ces flux doivent pouvoir être identifiés par les modules 18 de routage. A cette fin, des mécanismes de marquage des flux de la session sont mis en place. Avantageusement, les paquets des flux de la session sont marqués lors de leur émission par les terminaux demandeur 1 et sollicité 2 dans le champ dit « Flow Label » de leur en-tête, champ prévu pour identifier facilement des paquets d'une même session pour lesquels un traitement spécial de la part des modules 18 de routage des noeuds de bordure 10 est demandé. Les flux de la session sont donc facilement identifiables, ce qui permet aux modules 20', 20" de bordure d'entrée et de sortie de contrôler, pendant toute la durée de la session, les caractéristiques de ces flux.

On comprend ainsi de la description qui précède comment le procédé de transmission selon l'invention permet de garantir une qualité de service pour l'ensemble des flux d'une session, malgré la variabilité du débit des liens du réseau, et comment ce procédé permet d'optimiser les ressources du réseau, selon de multiples critères qui peuvent être définis session par session.

Il devra toutefois être compris que l'exemple de réalisation présenté ci-dessus n'est pas limitatif.

Notamment, la détermination de l'état des liens et de la topologie du réseau n'est pas nécessairement réalisée suivant un protocole de routage à états de lien.

Par ailleurs, les modules de routage peuvent s'appuyer sur des principes de routage et d'aiguillage des paquets issus du protocole MPLS (Multiprotocol Label Switching), protocole basé sur l'attribution d'étiquettes aux paquets de données pour la commutation des paquets.

Selon un autre mode de réalisation, les modules de routage s'appuient sur des principes de routage et d'aiguillage multi-topologie, permettant de sélectionner, pour chaque service négocié, la topologie la mieux adaptée à ce service.

Plus généralement, l'invention n'est pas limitée aux protocoles de routage, de réservation ou de signalisation cités dans le mode de réalisation décrit.

De plus, le terminal sollicité n'est pas nécessairement unique, la session pouvant être établie entre plusieurs terminaux.

## Revendications

1. Procédé de transmission d'au moins un flux de données d'une session multimédia à travers un réseau (3) de télécommunication distribué comprenant au moins un coeur (4) de réseau comprenant une pluralité de noeuds (10, 12) interconnectés par une pluralité de liens (7), chaque noeud (10, 12, 14) dudit réseau (3) comportant un module (18) de routage, ladite session étant établie entre un premier terminal (1) et au moins un deuxième terminal (2) hors du coeur (4) du réseau, et ledit coeur (4) de réseau comprenant en outre au moins deux modules (20, 20', 20") de bordure, constituant des points d'accès audit coeur (4) de réseau pour lesdits premier et deuxième terminaux (1, lequel comporte les étapes suivantes :
- détermination (30) par lesdits modules (20, 20', 20") de bordure d'informations relatives à la topologie de routage et à l'état des liens (7, 16) dudit réseau, et nécessaires à la transmission de flux de données de la session,
- détermination (38), par un module (20) de bordure sollicité par le premier terminal (1), de paramètres de ladite session comprenant une durée de la session, et de contraintes d'écoulement des flux de ladite session dans le coeur (4) de réseau,
- sélection (40) par ledit module (20) de bordure sollicité, lorsque lesdits flux de données doivent traverser ledit coeur (4) de réseau, d'un module (20') de bordure d'entrée et d'un module (20") de bordure de sortie dudit coeur (4) de réseau pour lesdits flux, en fonction desdites contraintes d'écoulement de flux et desdits paramètres de la session déterminés, et desdites informations relatives à la topologie de routage et aux états des liens (7, 16),
- prédétermination (42) d'un chemin, dudit module (20') de bordure d'entrée audit module (20") de bordure de sortie, pour l'ensemble desdits flux de la session, à travers ledit coeur (4) de réseau, en fonction desdites contraintes d'écoulement des flux et desdites informations relatives à la topologie de routage et à l'état des liens (7, 16), et en fonction d'objectifs d'optimisation du coeur (4) de réseau,
- mise en place (44) de ressources nécessaires pour satisfaire lesdites contraintes d'écoulement le long dudit chemin et les objectifs d'optimisation, et définition de règles de routage auprès de modules (18) de routage situés le long dudit chemin, et
- transmission (48) desdits flux de la session seulement par ledit chemin prédéterminé,
le procédé comprenant en outre une étape de compression d'en-têtes des paquets des flux de la session, avant leur transmission dans le coeur (4) de réseau, et une étape de décompression de ces en-têtes, après leur transmission dans le coeur (4) de réseau.

2. Procédé de transmission de flux de données d'une session multimédia selon la revendication 1, **caractérisé en ce que** l'étape (30) de détermination par lesdits modules (20, 20', 20") de bordure d'informations relatives à la topologie de routage et à l'état des liens (7, 16) dudit réseau (3) comprend la détermination par lesdits modules (18) de routage desdites informations et la transmission desdites informations depuis lesdits modules (18) de routage vers lesdits modules (20, 20', 20") de bordure.

3. Procédé de transmission de flux de données d'une session multimédia selon l'une des revendications précédentes, **caractérisé en ce qu'**il comprend en outre une étape de marquage desdits flux pour qu'ils suivent ledit chemin prédéterminé.

4. Procédé de transmission de flux de données d'une session multimédia selon l'une des revendications précédentes, **caractérisé en ce que** l'étape (38) de détermination desdites contraintes d'écoulement des flux comprend la détermination de la priorité de ladite session par rapport à d'autres sessions, et **en ce que** l'étape (44) de mise en place des ressources nécessaires comprend la préemption des ressources le long dudit chemin, en fonction de la priorité de la session.

5. Procédé de transmission de flux de données d'une session multimédia selon l'une des revendications précédentes, **caractérisé en ce que** l'étape (44) de mise en place des ressources et de définition des règles de routage comprend la réservation des ressources le long dudit chemin, dans ledit coeur (4) de réseau, interdisant leur usage par d'autres sessions pendant toute la durée de la session.

6. Système de transmission d'au moins un flux de données d'une session multimédia à travers un réseau (3) de télécommunication distribué comprenant au moins un coeur (4) de réseau comprenant une pluralité de noeuds (10, 12) interconnectés par une pluralité de liens (7), ladite session étant établie entre un premier terminal (1) et au moins un deuxième terminal (2) hors dudit coeur (4) de réseau, ledit système comprenant, en bordure dudit coeur (4) de réseau, au moins deux modules (20, 20', 20") de bordure, constituant des points d'accès audit coeur (4) de réseau pour lesdits premier et deuxième terminaux (1, 2), et en chaque noeud (10, 12, 14) dudit réseau un module (18) de routage, dans lequel:
- lesdits modules (20, 20', 20") de bordure comprennent des moyens pour déterminer des informations relatives à la topologie de routage et à l'état des liens (7, 16) dudit réseau (3), et nécessaires à la transmission de flux de données de la session,
- lesdits modules (20, 20', 20") de bordure comprennent des moyens pour déterminer, lorsqu'ils sont sollicités par le premier terminal (1), des paramètres de ladite session comprenant une durée de la session, et des contraintes d'écoulement des flux de ladite session dans le coeur (4) de réseau,
- lesdits modules (20, 20', 20") de bordure comprennent des moyens pour sélectionner, lorsque lesdits flux de données doivent traverser ledit coeur (4) de réseau, un module (20') de bordure d'entrée et un module (20") de bordure de sortie dudit coeur (4) de réseau pour lesdits flux, en fonction desdites contraintes d'écoulement de flux et desdits paramètres de la session déterminés, et desdites informations relatives à la topologie de routage et aux états des liens (7, 16),
- ledit système comprend des moyens (20, 20', 20") pour prédéterminer un chemin, dudit module (20') de bordure d'entrée audit module (20") de bordure de sortie, pour l'ensemble desdits flux de la session, à travers ledit coeur (4) de réseau, en fonction desdites contraintes d'écoulement des flux et desdites informations relatives à la topologie de routage et à l'état des liens (7, 16), et en fonction d'objectifs d'optimisation du coeur (4) de réseau,
- ledit système comprend des moyens (18) pour mettre en place des ressources nécessaires pour satisfaire lesdites contraintes d'écoulement et lesdits objectifs d'optimisation le long dudit chemin et pour définir des règles de routage auprès de modules (18) de routage situés le long dudit chemin, et
- ledit système comprend des moyens pour transmettre lesdits flux de la session seulement par ledit chemin prédéterminé,
le système comprenant des moyens pour compresser des en-têtes des paquets des flux de la session, avant leur transmission dans le coeur (4) de réseau, et des moyens pour décompresser lesdits en-têtes, après leur transmission dans le coeur (4) de réseau.

7. Système de transmission d'au moins un flux de données d'une session multimédia selon la revendication 6, **caractérisé en ce que** lesdits modules (18) de routage comportent en outre des moyens pour déterminer lesdites informations relatives à la topologie de routage et à l'état des liens (7, 16) dudit réseau (3) et pour transmettre lesdites informations vers lesdits modules (20, 20', 20") de bordure.

8. Système de transmission d'au moins un flux de données d'une session multimédia selon l'une des revendications 6 ou 7, **caractérisé en ce qu'**il comprend des moyens pour marquer lesdits flux pour qu'ils suivent ledit chemin prédéterminé.

9. Système de transmission d'au moins un flux de données d'une session multimédia selon l'une des revendications 6 à 8, **caractérisé en ce que** lesdits moyens pour déterminer lesdites contraintes d'écoulement des flux de la session comprennent des moyens pour déterminer la priorité de ladite session par rapport à d'autres sessions, et **en ce que** les moyens pour mettre en place les ressources nécessaires pour satisfaire lesdites contraintes d'écoulement le long dudit chemin comprennent des moyens pour préempter lesdites ressources le long dudit chemin, en fonction de la priorité de la session.

10. Système de transmission d'au moins un flux de données d'une session multimédia selon l'une des revendications 6 à 9, **caractérisé en ce que** lesdits moyens (18) pour mettre en place lesdites ressources nécessaires comprennent des moyens pour réserver lesdites ressources le long dudit chemin, dans ledit coeur (4) de réseau et pour interdire leur usage par d'autres sessions pendant tout ladite durée de la session.

## Patentansprüche

1. Verfahren zum Übertragen von mindestens einem Datenstrom einer Multimediasitzung über ein verteiltes Telekommunikationsnetzwerk (3), aufweisend mindestens einen Netzwerkkern (4), der eine Mehrzahl von Knoten (10, 12) aufweist, die durch eine Mehrzahl von Verbindungen (7) miteinander verbunden sind, wobei jeder Knoten (10, 12, 14) des Netzwerks (3) ein Routing-Modul (18) aufweist, wobei die Sitzung zwischen einem ersten Endgerät (1) und mindestens einem zweiten Endgerät (2) außerhalb des Kerns (4) des Netzwerks hergestellt ist und der Netzwerkkern (4) ferner mindestens zwei Randmodule (20, 20', 20") aufweist, die Zugangspunkte zu dem Netzwerkkern (4) für das erste und das zweite Endgerät (1, 2) bilden, wobei es die folgenden Schritte aufweist:
- Bestimmen (30) mittels der Randmodule (20, 20', 20") von Informationen, die sich auf die Routing-Topologie und den Zustand der Verbindungen (7, 16) des Netzwerks beziehen und die für die Übertragung von Datenströmen der Sitzung erforderlich sind,
- Bestimmen (38) mittels eines durch das erste Endgerät (1) angefragten Randmoduls (20) von Parametern der Sitzung, aufweisend eine Dauer der Sitzung, und von Fließbeschränkungen der Ströme der Sitzung in dem Netzwerkkern (4),
- Auswählen (40) durch das angefragte Randmodul (20), wenn die Datenströme den Netzwerkkern (4) durchqueren sollen, eines Eingangsrandmoduls (20') und eines Ausgangsrandmoduls (20") des Netzwerkkerns (4) für die Ströme, in Abhängigkeit von den Fließbeschränkungen von Strömen und den bestimmten Parametern der Sitzung und den Informationen, die die Routing-Topologie und die Zustände der Verbindungen (7, 16) betreffen,
- Vorbestimmen (42) eines Pfades, von dem Eingangsrandmodul (20') zu dem Ausgangsrandmodul (20"), für die Gesamtheit der Ströme der Sitzung durch den Netzwerkkern (4) hindurch in Abhängigkeit von den Fließbeschränkungen der Ströme und den Informationen in Bezug auf die Routing-Topologie und den Zustand der Verbindungen (7, 16), und in Abhängigkeit von Optimierungszielen des Netzwerkkerns (4),
- Einrichten (44) von Ressourcen, die erforderlich sind, um die Fließbeschränkungen entlang dem Pfad und die Optimierungsziele zu erfüllen, und Definieren von Routing-Regeln bei Routing-Modulen (18), die sich entlang dem Pfad befinden, und
- Übertragen (48) der Ströme der Sitzung nur über den vorbestimmten Pfad,
wobei das Verfahren ferner einen Schritt des Komprimierens von Köpfen der Pakete der Ströme der Sitzung vor ihrer Übertragung in dem Netzwerkkern (4) und einen Schritt des Dekomprimierens dieser Köpfe nach ihrer Übertragung in dem Netzwerkkern (4) aufweist.

2. Verfahren zum Übertragen von Datenströmen einer Multimediasitzung gemäß Anspruch 1, **dadurch gekennzeichnet, dass** der Schritt (30) des Bestimmens durch die Randmodule (20, 20', 20") von Informationen, die sich auf die Routing-Topologie und den Zustand der Verbindungen (7, 16) des Netzwerks (3) beziehen, das Bestimmen der Informationen durch die Routing-Module (18) und das Übermitteln der Informationen von den Routing-Modulen (18) in Richtung der Randmodule (20, 20', 20") aufweist.

3. Verfahren zum Übertragen von Datenströmen einer Multimediasitzung gemäß einem der vorhergehenden Ansprüche, **dadurch gekennzeichnet, dass** es ferner einen Schritt des Kennzeichnens der Ströme aufweist, damit sie dem vorbestimmten Pfad folgen.

4. Verfahren zum Übertragen von Datenströmen einer Multimediasitzung gemäß einem der vorhergehenden Ansprüche, **dadurch gekennzeichnet, dass** der Schritt (38) des Bestimmens der Fließbeschränkungen der Ströme das Bestimmen der Priorität der Sitzung bezüglich anderer Sitzungen aufweist, und dass der Schritt (44) des Einrichten der erforderlichen Ressourcen das präemptive Abarbeiten der Ressourcen entlang dem Pfad in Abhängigkeit von der Priorität der Sitzung aufweist.

5. Verfahren zum Übertragen von Datenströmen einer Multimediasitzung gemäß einem der vorhergehenden Ansprüche, **dadurch gekennzeichnet, dass** der Schritt (44) des Einrichtens der Ressourcen und des Definierens der Routing-Regeln das Reservieren der Ressourcen entlang dem Pfad in dem Netzwerkkern (4) aufweist, wobei ihre Verwendung durch andere Sitzungen während der gesamten Dauer der Sitzung untersagt ist.

6. System zum Übertragen mindestens eines Datenstroms einer Multimediasitzung über ein verteiltes Telekommunikationsnetzwerk (3), aufweisend mindestens einen Netzwerkkern (4), der eine Mehrzahl von Knoten (10, 12) aufweist, die durch eine Mehrzahl von Verbindungen (7) miteinander verbunden sind, wobei die Sitzung zwischen einem ersten Endgerät (1) und mindestens einem zweiten Endgerät (2) außerhalb des Netzwerkkerns (4) hergestellt wird, wobei das System am Rand des Netzwerkkerns (4) mindestens zwei Randmodule (20, 20', 20"), die Zugangspunkte zum Netzwerkkern (4) für das erste und das zweite Endgerät (1, 2) bilden, und an jedem Knoten (10, 12, 14) des Netzwerks ein Routing-Modul (18) aufweist, wobei:
- die Randmodule (20, 20', 20") aufweisen: Mittel zum Bestimmen von Informationen, die sich auf die Routing-Topologie und auf den Zustand der Verbindungen (7, 16) des Netzwerks (3) beziehen, und die ferner zum Übertragen von Datenströmen der Sitzung erforderlich sind,
- die Randmodule (20, 20', 20") aufweisen: Mittel zum Bestimmen, wenn sie von dem ersten Endgerät (1) angefragt werden, von Parametern der Sitzung, aufweisend eine Dauer der Sitzung, und der Fließbeschränkungen der Ströme der Sitzung in dem Netzwerkkern (4),
- die Randmodule (20, 20', 20") aufweisen: Mittel zum Auswählen, wenn die Datenströme den Netzwerkkern (4) durchqueren sollen, eines Eingangsrandmoduls (20') und eines Ausgangsrandmoduls (20") des Netzwerkkerns (4) für die Ströme in Abhängigkeit von den Fließbeschränkungen von Strömen und den bestimmten Parametern der Sitzung, und den Informationen, die sich auf die Routing-Topologie und auf die Zustände der Verbindungen (7, 16) beziehen,
- das System aufweist: Mittel (20, 20', 20") zum Vorbestimmen eines Pfades von dem Eingangsrandmodul (20') zum Ausgangsrandmodul (20") für die Gesamtheit der Ströme der Sitzung, durch den Netzwerkkern (4) hindurch, in Abhängigkeit von den Fließbeschränkungen der Ströme und den Informationen, die sich auf die Routing-Topologie und den Zustand der Verbindungen (7, 16) beziehen, und in Abhängigkeit von Optimierungszielen des Netzwerkkerns (4),
- das System aufweist: Mittel (18) zum Einrichten von Ressourcen, die erforderlich sind, um die Fließbeschränkungen und die Optimierungsziele entlang dem Pfad zu erfüllen und Routing-Regeln bei Routing-Modulen (18) zu definieren, die sich entlang dem Pfad befinden, und
- das System aufweist: Mittel, um die Ströme der Sitzung nur über den vorbestimmten Pfad zu übertragen,
wobei das System Mittel zum Komprimieren der Köpfe der Pakete der Ströme der Sitzung vor ihrer Übertragung in dem Netzwerkkern (4) und Mittel zum Dekomprimieren der Köpfe nach ihrer Übertragung in dem Netzwerkkern (4) aufweist.

7. System zum Übertragen mindestens eines Datenstroms einer Multimediasitzung gemäß Anspruch 6, **dadurch gekennzeichnet, dass** die Routing-Module (18) ferner aufweisen: Mittel zum Bestimmen der Informationen, die sich auf die Routing-Topologie und den Zustand der Verbindungen (7, 16) des Netzwerks (3) beziehen, und zum Übertragen der Informationen an die Randmodule (20, 20', 20").

8. System zum Übertragen mindestens eines Datenstroms einer Multimediasitzung gemäß einem der Ansprüche 6 oder 7, **dadurch gekennzeichnet, dass** es Mittel aufweist, um die Ströme zu kennzeichnen, damit sie dem vorbestimmten Pfad folgen.

9. System zum Übertragen mindestens eines Datenstroms einer Multimediasitzung gemäß einem der Ansprüche 6 bis 8, **dadurch gekennzeichnet, dass** die Mittel zum Bestimmen der Fließbeschränkungen der Ströme der Sitzung Mittel zum Bestimmen der Priorität der Sitzung in Bezug auf andere Sitzungen aufweisen, und dass die Mittel zum Einrichten der Ressourcen, die erforderlich sind, um die Fließbeschränkungen entlang dem Pfad zu erfüllen, Mittel zum präemptiven Abarbeiten der Ressourcen entlang dem Pfad in Abhängigkeit von der Priorität der Sitzung aufweisen.

10. System zum Übertragen mindestens eines Datenstroms einer Multimediasitzung gemäß einem der Ansprüche 6 bis 9, **dadurch gekennzeichnet, dass** die Mittel (18) zum Einrichten der erforderlichen Ressourcen Mittel aufweisen, um die Ressourcen entlang dem Pfad in dem Netzwerkkern (4) zu reservieren und ihre Verwendung durch andere Sitzungen während der gesamten Dauer der Sitzung zu untersagen.

## Claims

1. A method for transmitting at least one data stream of a multimedia session through a distributed telecommunications network (3) comprising at least one network core (4) comprising a plurality of nodes (10, 12) interconnected by a plurality of links (7), each node (10, 12, 14) of said network (3) having a routing module (18), said session being established between a first terminal (1) and at least one second terminal (2) outside the network core (4), and said network core (4) also comprising at least two border modules (20, 20', 20"), making up points of access to said network core (4) for the first and second terminals (1, 2), the method including the following steps:
- determination (30), by said border modules (20, 20', 20"), of information relative to the routing topology and the status of the links (7, 16) of said network, necessary for the transmission of data streams of the session,
- determination (38), by a border module (20) addressed by the first terminal (1), of parameters of said session comprising a length of the session and flow constraints for the streams of said session in the network core (4),
- selection (40), by said addressed border module (20), when said data streams must pass through the network core (4), of an input border module (20') and an output border module (20") of said network core (4) for said streams, as a function of said stream flow constraints and said predetermined session parameters, and said information relative to the routing topology and the status of the links (7, 16),
- predetermination (42) of a path, from said input border module (20') to said output border module (20"), for all of said streams of the session, through said network core (4), as a function of said flow constraints of the streams and said information relative to the routing topology and the status of the links (7, 16), and as a function of optimization objectives for the network core (4),
- establishment (44) of the resources necessary to satisfy said flow constraints along said path and the optimization objectives, and definition of routing rules with routing modules (18) situated along said path, and
- transmission (48) of said streams of the session only using said predetermined path, the method also comprising a step for compressing headers of the packets of the streams of the session, before they are transmitted in the network core (4), and a step for decompressing those headers, after they are transmitted in the network core (4).

2. The method for transmitting data streams of a multimedia session according to claim 1, **characterized in** the step (30) for determination by the border modules (20, 20', 20") of information relative to the routing topology and the status of the links (7, 16) of the network (3) comprises the determination by the routing modules (18) of said information and the transmission of the information from the routing modules (18) to the border modules (20, 20', 20").

3. The method for transmitting data streams of a multimedia session according to one of the preceding claims, **characterized in that** it also comprises a step for marking the streams so that they follow the predetermined path.

4. The method for transmitting data streams of a multimedia session according to one of the preceding claims, **characterized in that** the step (38) for determining the flow constraints of the streams comprises determining the priority of the session relative to other sessions, and **in that** the step (44) for establishing the necessary resources comprises preempting resources along the path, as a function of the priority of the session.

5. The method for transmitting data streams of a multimedia session according to one of the preceding claims, **characterized in that** the step (44) for establishing the resources and defining the routing rules comprises reserving resources along the path, in the network core (4), prohibiting them from being used by other sessions throughout the entire length of the session.

6. A system for transmitting at least one data stream of a multimedia session through a distributed telecommunications network (3) comprising at least one network core (4) comprising a plurality of nodes (10, 12) interconnected by a plurality of links (7), said session being established between a first terminal (1) and at least one second terminal (2) outside said network core (4), said system comprising at least two border modules (20, 20', 20") on the border of the network core (4), making up points of access to said network core for the first and second terminals (1, 2), and a routing module (18) in each node (10, 12, 14) of said network, wherein:
- said border modules (20, 20', 20") comprise means for determining information relative to the routing topology and the status of the links (7, 16) of said network (3), necessary for the transmission of data streams of the session,
- said border modules (20, 20', 20") comprise means for determining parameters of said session comprising a length of the session, and flow constraints of the streams of said session in the network core (4), when they are addressed by the first terminal (1),
- the border modules (20, 20', 20") comprise means for selecting, when the data streams must pass through the network core (4), an input border module (20') and an output border module (20") of said network core (4) for said streams, as a function of the stream flow constraints and the predetermined session parameters, and the information relative to the routing topology and the statuses of the links (7, 16),
- said system comprises means (20, 20', 20") for predetermining a path, from the input border module (20') to the output border module (20"), for all the streams of the session, through said network core (4), as a function of the flow constraints of the streams and the information relative to the routing topology and the status of the links (7, 16), and as a function of optimization objectives of the network core (4),
- the system comprises means (18) for establishing the resources necessary to satisfy the flow constraints and the optimization objectives along said path and to define routing rules with the routing modules (18) situated along the path, and
- the system comprises means for transmitting the streams of the session only using the predetermined path,
- the system comprising means for compressing headers of the packets of the streams of the session, before they are transmitted in the network core (4), and means for decompressing said headers after they are transmitted in the network core (4).

7. The system for transmitting at least one data stream of a multimedia session according to claim 6, **characterized in that** the routing modules (18) also include means for determining the information relative to the routing topology and the status of the links (7, 16) of said network (3), and for transmitting that information to the border modules (20, 20', 20").

8. The system for transmitting at least one data stream of a multimedia session according to one of claims 6 or 7, **characterized in that** it comprises means for marking the streams so that they follow the predetermined path.

9. The system for transmitting at least one data stream of a multimedia session according to one of claims 6 to 8, **characterized in that** the means for determining the flow constraints of the streams of the session comprise means for determining the priority of the session relative to other sessions, and the means for establishing the resources necessary to satisfy the flow constraints along the path comprise means for preempting the resources along the path, as a function of the priority of the session.

10. The system for transmitting at least one data stream of a multimedia session according to one of claims 6 to 9, **characterized in that** the means (18) for establishing the necessary resources comprise means for reserving said resources along the path, in the network core (4), and for prohibiting them from being used by other sessions throughout the entire duration of the session.
